# EUROPÄISCHE PATENTSCHRIFT

(11) **EP 2 743 614 B1**
(45) Veröffentlichungstag und Bekanntmachung des Hinweises auf die Patenterteilung: **02.10.2019**
(21) Anmeldenummer: 12008284.7
(22) Anmeldetag: 12.12.2012
(51) Int. Cl.: F25D 3/10

(54) **Lagerkassette für Laborobjekte**
Storage cartridge for laboratory objects
Caisson de stockage pour objets de laboratoire

(43) Veröffentlichungstag der Anmeldung: 18.06.2014
(73) Patentinhaber: LICONIC AG, 9493 Mauren (LI)
(72) Erfinder: Malin, Cosmas, FL-9493 Mauren (LI)
(74) Vertreter: Sutter, Kurt

(56) Entgegenhaltungen:
- WO-A2-98/43592
- JP-A- 2005 143 873
- US-A- 3 272 579
- US-A- 3 782 133

## Beschreibung

### Gebiet der Erfindung

Die Erfindung betrifft einen Lagerbehälter für die Tieftemperaturlagerung von Laborobjekten. Unter Tieftemperaturlagerung ist dabei eine Lagerung bei Temperaturen unterhalb von 0°C, insbesondere unterhalb von - 160°C, zu verstehen.

### Hintergrund

Die Lagerung von Laborobjekten bei sehr tiefen Temperaturen, so z.B. bei Temperaturen unterhalb von -160°C, typischerweise bei -196°C, ist sehr aufwändig und einer Automatisierung schwer zugänglich. Eine Lageranlage für tiefe Temperaturen ist aus EP 1 972 874 bekannt, aber diese Anlage ist nur bedingt für wirklich tiefe Temperaturen geeignet.

US 2010/0275636 beschreibt einen vakuumisolierten Lagerbehälter für Laborobjekte, mit welchem kryogene Temperaturen erreicht werden können.

US 5 233 844 beschreibt eine Lageranlage für kryogene Temperaturen, bei welcher Laborobjekte in einem Karussell innerhalb eines thermisch isolierten Lagerbehälters aufbewahrt werden können.

US 3 272 579 und JP 2005-143873 beschreiben Lagerbehälter zur Tieftemperaturlagerung von Laborobjekten. Im Lagerbehälter ist ein Karussell vorgesehen. Gemäss JP 2005-143873 nimmt das Karussell mehrere Lagerkassetten auf.

### Darstellung der Erfindung

Es stellt sich die Aufgabe, einen Lagerbehälter der oben erwähnten Art bereitzustellen, bei welchem eine Lagerung einer grossen Zahl von Laborobjekten u.a. auch bei sehr tiefen Temperaturen und geringen Kälteverlusten möglich ist.

Diese Aufgabe wird vom Lagerbehälter gemäss dem Anspruch 1 erfüllt.

Demgemäss besitzt der Lagerbehälter einen Innenraum und eine um den Innenraum angeordnete Isolation. Der Innenraum wird durch einen Deckenbereich nach oben abgeschlossen. Im Deckenbereich ist eine Öffnung vorgesehen, welche einen Zugriff auf den Innenraum von aussen ermöglicht. Im Innenraum befindet sich ein Karussell mit Lagerplätzen für die Laborobjekte. Weiter ist ein oberes Drehlager vorgesehen, welches oberhalb des Karussells angeordnet ist und an welchem das Karussell drehbar aufgehängt ist.

Indem das Karussell drehbar aufgehängt ist, kann auf ein stark gewichtstragendes Drehlager am unteren Ende des Karussells verzichtet werden. Dies ist von Vorteil, da es schwierig ist, Drehlager bereitzustellen, welche in der Lage sind, grössere Gewichte zu tragen und tiefen Temperaturen zu widerstehen.

Vorteilhaft ist das obere Drehlager ausserhalb der Isolation angeordnet, so dass es in einfacher Weise auf einer deutlich höheren Temperatur gehalten werden kann als der Innenraum des Lagerbehälters. Dies vereinfacht die Konstruktion des oberen Drehlagers.

In einer weiteren vorteilhaften Ausführung besitzt der Lagerbehälter einen vertikal über den Deckenbereich nach oben hinaus ragenden Halsabschnitt. Die Isolation erstreckt sich durch den Deckenbereich und den Halsabschnitt bis zum oberen Ende des Halsabschnitts. Das obere Drehlager ist am oberen Ende des Halsabschnitts angeordnet. Durch diese Konstruktion kann die Durchführung des Karussells zum oberen Drehlager relativ lange ausgestaltet sein, so dass a Kälteverlust reduziert wird.

Das obere Drehlager ist vorteilhaft ein Pendelrollenlager oder ein Achsialkugellager, da ein solches auch in achsialer Richtung eine relativ grosse Last aufnehmen kann und zudem in der Lage ist, auch leichte Fehler in der Achsrichtung zu tolerieren. Weitere vorteilhafte Lagertypen sind aufgrund ihrer achsialen Belastbarkeit Schulterkugellager und Kegelrollenlager.

Erfindungsgemäss sind die Lagerobjekte in Lagerkassetten gelagert, von denen jede eine Mehrzahl der Lagerplätze übereinander bildet. Jede Lagerkassette kann als Ganzes durch die Öffnung aus dem Lagerbehälter entnommen werden. Das Karussell weist ein Bodenelement auf, das z.B. als Bodenplatte ausgestaltet sein kann. Auf dem Bodenelement ruhen die Lagerkassetten. Beabstandet von den Bodenplatten weist das Karussell mindestens ein Führungselement auf, welches die auf dem Bodenelement ruhenden Lagerkassetten horizontal führt, aber eine vertikale Bewegung der Lagerkassetten zulässt. Dank dem Führungselement kann einem Kippen der Lagerkassetten beim Drehen des Karussells in einfacher Weise entgegengewirkt werde.

Am unteren Ende des Karussells kann weiter ein unteres Drehlager vorgesehen sein, welches seitliche Auslenkungen des Karussells beschränkt.

Das untere Drehlager kann so ausgestaltet sein, dass auf ihm im Normalbetrieb des Lagerbehälters keine vertikalen Kräfte lasten (was so zu verstehen ist, dass die vertikalen Kräfte, die auf das obere Drehlager wirken, mindestens zehnmal grösser sind als die vertikalen Kräfte, die auf das untere Drehlager wirken). Es ist allerdings denkbar, dass das untere Drehlager ausserhalb des Normalbetriebs, z.B. bei einer Wartung oder einem Ersatz des oberen Drehlagers, auch höhere Kräfte aufnehmen kann. Insbesondere kann das Karussell in diesem Fall etwas abgesenkt werden, so dass sein Gewicht temporär auf dem unteren Drehlager zu liegen kommt.

### Kurze Beschreibung der Zeichnungen

Weitere Ausgestaltungen, Vorteile und Anwendungen der Erfindung ergeben sich aus den abhängigen Ansprüchen und aus der nun folgenden Beschreibung anhand der Figuren. Dabei zeigen:
Fig. 1 eine Ansicht einer Lageranlage, wobei die Aussenwände nur teilweise dargestellt sind,
Fig. 2 eine zweite Ansicht der Lageranlage von Fig. 1,
Fig. 3 einen vertikalen Schnitt durch einen Lagerbehälter,
Fig. 4 eine Ansicht des Lagerbehälters nach Fig. 3,
Fig. 5 das Karussell des Lagerbehälters nach Fig. 3,
Fig. 6 einen Schnitt durch das obere Drehlager des Lagerbehälters,
Fig. 7 einen Schnitt durch das untere Drehlager des Lagerbehälters und
Fig. 8 eine Lagerkassette.

### Wege zur Ausführung der Erfindung

### Definitionen:

Begriffe der Art "oben", "unten", "oberhalb", "unterhalb" sowie "horizontal" und "vertikal" beziehen sich auf ein Referenzsystem, bei welchem die Drehachse des Karussells des Lagerbehälters vertikal angeordnet ist und das Bodenelement, auf welchem die Kassetten ruhen, sich unterhalb der Kassetten befindet.

### Übersicht:

Im Folgenden werden eine Lageranlage und ein Lagerbehälter für eine solche Lageranlage sowie eine Lagerkassette für den Lagerbehälter beschrieben. Die Lageranlage ist jedoch nicht auf die Verwendung mit den beschriebenen Lagerbehältern oder -kassetten beschränkt. Ebensowenig sind die Lagerbehälter auf die Verwendung in der beschriebenen Lageranlage und mit den beschriebenen Lagerkassetten beschränkt, und auch die Lagerkassetten können unabhängig von der Lageranlage und den Lagerbehältern eingesetzt werden.

### Lageranlage:

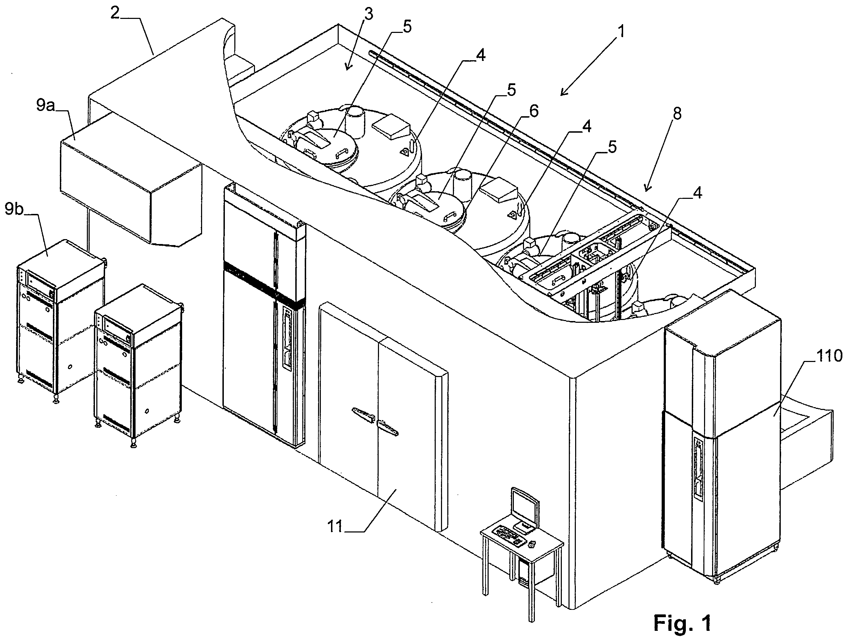

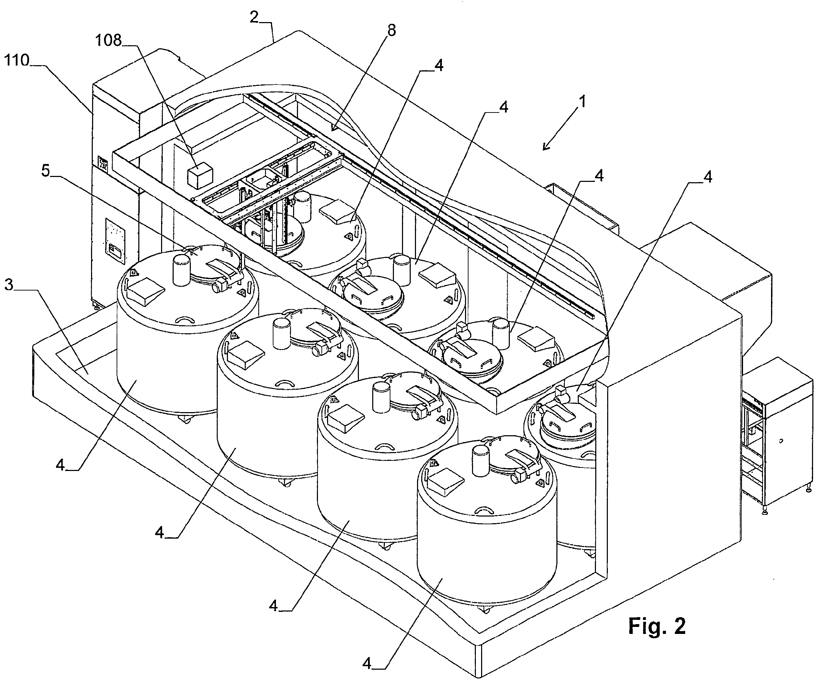

Fig. 1 und 2 zeigen eine Lageranlage 1 zur Langzeitlagerung von Proben bei sehr tiefen Temperaturen, insbesondere einer Lagertemperatur Ts unterhalb -160°C, typischerweise bei -196°C. Die Lageranlage ist dazu ausgestaltet, die Proben automatisch ein- und auszulagern und innerhalb der Lageranlage zwischen unterschiedlichen Lagerpositionen zu bewegen. Anlagen dieser Art haben hohe Anforderungen betreffend Sicherheit für die Proben, Zuverlässigkeit und Energieeffizienz zu erfüllen.

Die Proben sind beispielsweise in Probenröhrchen untergebracht, welche ihrerseits in Platten angeordnet sind. Jeweils mehrere dieser Probenplatten werden übereinander in einer Lagerkassette gelagert.

Die Lageranlage besitzt ein isoliertes Aussengehäuse 2, das eine Kammer 3 umschliesst. In der Kammer 3 ist mindestens ein Lagerbehälter 4 angeordnet. Vorzugsweise sind mehrere solche Lagerbehälter 4 vorgesehen. Jeder Lagerbehälter 4 ist vorteilhaft als Dewargefäss ausgebildet und weist in bekannter Weise eine evakuierte, verspiegelte Isolationswand auf, welche eine Vakuumisolation bildet und geringe Wärmeleitung besitzt. Die Dewargefässe sind in der gezeigten Ausführung allseitig geschlossen und zum Zugriff auf ihren Innenraum ist jeweils ein Deckel 5 vorgesehen. Der Deckel 5 verschliesst eine auf der Oberseite des Dewargefässes angeordnete Öffnung 6.

Die Kammer 3 ist vorzugsweise als Kühlkammer ausgestaltet. Die Temperatur Tc der Kammer 3 liegt vorteilhaft unter 0°C, insbesondere unter -20°C oder -50°C. Dieses Absenken der Temperatur verhindert die Eisbildung in den Lagerbehältern 4 bzw. an den Proben. Die Lagertemperatur Ts in den Lagerbehältern 4 ist kleiner als die Kammertemperatur Tc und liegt vorzugsweise bei den erwähnten "sehr tiefen Temperaturen", d.h. typisch bei -196 °C.

Eine Kühlung der Kammer 3 ist allerdings nicht absolut notwendig. Die Kammer 3 kann z.B. auch lediglich eine definierte Atmosphäre (beispielsweise trockene Luft oder Stickstoffatmosphäre) enthalten, oder es kann sich um einen nicht besonders klimatisierten Lagerraum handeln.

Weiter ist in der Kammer 3 eine Kommissioniervorrichtung 8 angeordnet. Diese Kommissioniervorrichtung 8 verfügt über je eine Transportvorrichtung für die Lagerkassetten, die Probenplatten und die Probenröhrchen. Sie ist verfahrbar oberhalb der Dewargefässe 4 angeordnet. Wie aus Fig. 1 und 2 ersichtlich, ist vorteilhaft genau eine Kommissioniervorrichtung 8 vorgesehen, welche alle Lagerbehälter 4 bedient.

Die Lageranlage umfasst weiter eine erste Kühlvorrichtung 9a zum Erzeugen der Innentemperatur Ti in der Kammer 3 sowie eine zweite Kühlvorrichtung 9b zum Erzeugen der Lagertemperatur Ts in den Dewargefässen 4.

Die Kammer 3 ist über eine Türe 11 zugänglich, welche ausreichend gross für die Aufnahme der Dewargefässe 4 ist.

### Lagerbehälter:

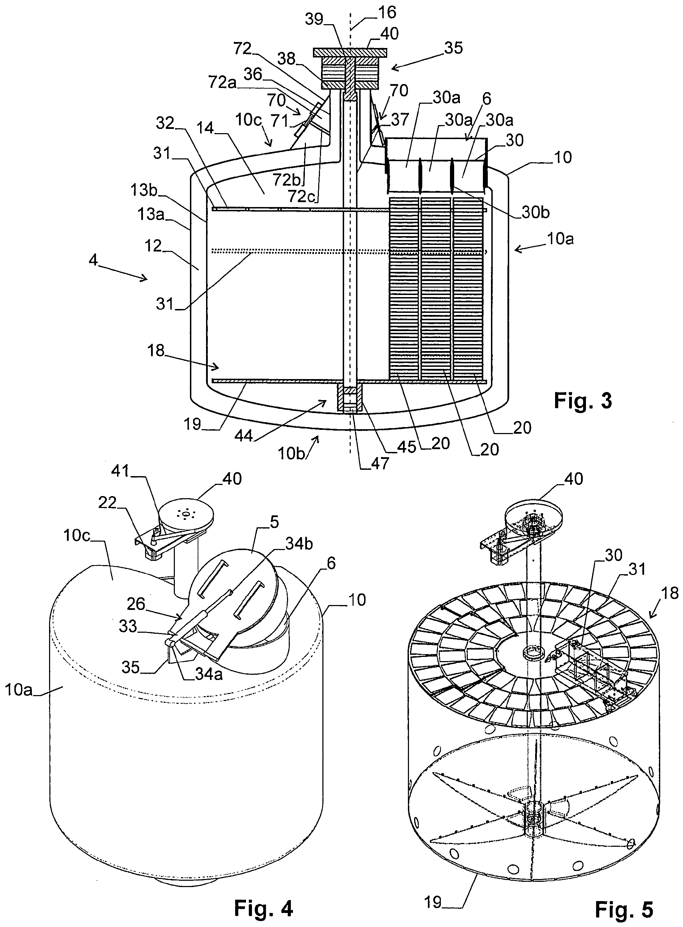

Eine vorteilhafte Ausführung eines Lagerbehälters 4 ist in Fig. 3 - 5 dargestellt. Es besitzt ein Gehäuse 10, in welchem die oben erwähnte Vakuumisolation 12 zwischen einer äusseren Wand 13a und einer inneren Wand 13b angebracht ist. Die Vakuumisolation 12 umschliesst einen Innenraum 14, der ein um eine vertikale Drehachse 16 drehbares Karussell 18 aufnimmt. Das Karussell 18 trägt auf einem Bodenelement 19 eine Vielzahl von Lagerkassetten 20, von denen in Fig. 3 drei dargestellt sind. Die Lagerkassetten 20 sind in mindestens einem, vorzugsweise in mehreren konzentrischen Kreisen um die Drehachse 16 angeordnet, wobei aif jedem Kreis vorteilhaft mehrere Lagerkassetten stehen.

Das Gehäuse 10 besitzt eine im Wesentlichen zylindrische Aussenwand 10a, welche einen Innenraum 14 seitlich umschliesst. Nach unten wird der Innenraum von einem einen im Wesentlichen horizontalen Bodenbereich 10b abgeschlossen, und nach oben von einem im Wesentlichen horizontalen Deckenbereich 10c.

Ein Positionierantrieb 22 (Fig. 4) dient dazu, das Karussell 18 um die Drehachse 16 zu drehen und in definierte Positionen zu bringen.

Die Türe 5 dient zum Verschliessen der Öffnung 6 kann mit einem Türantrieb 26 automatisch geöffnet und geschlossen werden. Die Öffnung 6 ist an der Oberseite des Dewargefässes 4 im Deckenbereich 10c angeordnet und so positioniert und dimensioniert, dass bei geöffneter Türe 5 jede Lagerkassette 20, die mit dem Positionierantrieb 22 in den Bereich der Öffnung 6 gedreht wurde, von oben herausgezogen werden kann. Vorzugsweise ist der horizontale Durchmesser der Öffnung 6 jedoch kleiner als der halbe horizontale Durchmesser des Dewargefässes 4, so dass ein übermässiger Kälteverlust beim Öffnen der Türe 5 vermieden werden kann.

Bei der Öffnung 6, insbesondere in der Öffnung 6, ist ein Zentrierelement 30 angeordnet. Dieses besitzt für jeden Kreis von Lagerkassetten 20 einen vertikalen Durchgang 30a, welcher die Lagerkassetten beim Einführen in oder Entnehmen aus dem Lagerbehälter 4 seitlich führt. Mit anderen Worten besitzt das Zentrierelement 30 also mehrere Durchgänge 30a, welche unterschiedlich weit von der Drehachse 16 des Karussells 18 beabstandet sind.

Das Zentrierelement 30 ist horizontal justierbar angeordnet, so dass der jeder Durchgang 30a auf exakt auf die Lagerplätze im Innern des Behälters ausgerichtet werden kann.

Wie dargestellt, sind die vertikalen Durchgänge 30a seitlich von Führungen 30b mit abgeschrägten Enden begrenzt, so dass eine Fehlausrichtung der Lagerkassetten korrigiert werden kann.

Die Führungen 30b dienen als seitliche Gleitlager für die Lagerkassetten, und ihr gegenseitiger Abstand ist so bemessen, dass die Lagerkassetten mit nur wenig Spiel und grosser Genauigkeit geführt sind. Die Führungen 30b besitzen eine relativ grosse Höhe, insbesondere von mindestens 5%, vorteilhaft von mindestens 10%, der Höhe der Lagerkassetten, so dass sie einem Verkippen der Lagerkassetten gut entgegenwirken können.

Weiter besitzt das Karussell 18 beabstandet vom Bodenelement 19 ein Führungselement 31, welches sich im Wesentlichen horizontal erstreckt und vorteilhaft eine Höhe wesentlich kleiner als die Höhe der Lagerkassetten besitzt. Es sichert die Lagerkassetten 20 horizontal, lässt aber eine vertikale Bewegung zu, d.h. es bildet horizontale Anschläge, so dass die Kassetten sich horizontal nicht verschieben oder kippen können. In der Ausführung nach Fig. 3 - 5 ist das Führungselement 31 als gitterartige Platte ausgestaltet, welche Führungsöffnungen 32 an den Standorten der Lagerkassetten 20 aufweist. Die Lagerkassetten 20 erstrecken sich durch die Führungsöffnungen 32, und der Querschnitt der Führungsöffnungen 32 ist geringfügig grösser als der horizontale Querschnitt der Lagerkassetten 20.

Um die Lagerkassetten 20 noch besser zu halten, können mehrere Führungselemente 31 vorgesehen sein, wie in Fig. 3 gestrichelt angedeutet. Die Führungselemente 31 sind in diesem Falle auf unterschiedlichen Höhen angeordnet.

Die Führungsöffnungen 32 sind auf die Durchgänge 30a der Zentrierung 30 ausgerichtet.

An den Führungsöffnungen 32 können Führungshilfen in Form von schräg verlaufenden Führungsflächen vorgesehen sein, welche ein Einführen der Kassetten vereinfachen. Bei ausreichend genauer Positionierung und Ausgestaltung des Zentrierelements 30 können solche Führungsflächen aber auch entfallen, so dass das Führungselement 31 in sehr einfacher Weise herstellbar ist.

Wie aus Fig. 4 ersichtlich, besitzt der Türantrieb 26 ein linear ausfahrbares Antriebsglied 33, z.B. in Form eines Pneumatik- oder Hydraulikzylinders. Das Antriebsglied 33 ist an einem ersten Ende 34a schwenkbar an einem nach oben vorstehenden Drehlager 35 des Gehäuses 10 des Lagerbehälters verbunden, und an einem zweiten Ende 34b schwenkbar mit der Türe 5. Die Türe 5 ist ebenfalls schwenkbar am Gehäuse 10 des Lagerbehälters befestigt. Durch Ein- bzw. Ausfahren des Antriebsglieds 33 kann die Türe 5 geöffnet bzw. geschlossen werden.

Die Lagerung des Karussells 18 ist in Fig. 3, 6 und 7 illustriert.

Das Karussell 18 ist im Lagerbehälter 4 drehbar aufgehängt, d.h. sein Gewicht wird (zu mindestens 90%) von einem oberen Drehlager 35 aufgenommen, das sich oberhalb des Karussells befindet. Vorzugsweise ist das obere Drehlager 35 ausserhalb der Isolation 12 angeordnet, so dass es bei relativ hoher Temperatur betrieben werden kann.

In der gezeigten Ausführung befindet sich das Drehlager am oberen Ende eines Halsabschnitts 36 des Lagerbehälters 4. Dieser Halsabschnitt 36 ragt vertikal über den Deckenbereich 10c nach oben, vorteilhaft um mindestens 20 cm. Der Aussendurchmesser des Halsabschnitts 36 ist vorzugsweise wesentlich kleiner als der Aussendurchmesser des Karussells, insbesondere kleiner als 10% als der Durchmesser des Karussells. Die Isolation 12 erstreckt sich über den Deckenbereich 10c und den Halsabschnitt bis 36 zum oberen Ende desselben, so dass auch im Halsabschnitt 36 eine Wärmebrücke vermieden wird.

Das Karussell 18 besitzt eine Antriebswelle 37, zur Reduktion der Wärmeleitung vorzugsweise in Form eines Hohlrohrs, das sich durch den Halsabschnitt 36 bis zum oberen Drehlager 35 erstreckt.

Das obere Drehlager 35 der dargestellten Ausführung ruht auf dem oberen Ende 38 des Halsabschnitts 36, so dass die Gewichtskraft des Karussells 18 gut an das Gehäuse 10 übertragen werden kann.

Das obere Drehlager 35 ist vorzugsweise schwenkjustierbar ausgestaltet, d.h. es kann zur Justierung der Drehachse gegenüber der Vertikalen verschwenkt werden, vorteilhaft zumindest um +/- 1°. Auf diese Weise kann das Karussell im Lagerbehälter genau positioniert werden.

In der Ausführung nach Fig. 3 sind zu diesem Zweck mindestens drei einstellbare Zug-/Stosselemente 70 vorgesehen (in Fig. 4 nicht dargestellt), mit welchen der Halsabschnitt 36 in mindestens drei unterschiedliche Richtungen elastisch ausgelenkt werden kann. Jedes Zug- /Stosselement 70 ist in der Lage, eine horizontale Zug- und/oder Stosskraftkomponente auf den Halsabschnitt 36 auszuüben, wobei die Grösse dieser Kraftkomponente fest einstellbar ist.

Beispielsweise weisen die Zug-/Stosselemente 70 als Gewindestangen 71 auf, welche endseitig einerseits mit dem Halsabschnitt 36 und andererseits mit dem Deckenbereich 10c verbunden sind. In der Ausführung nach Fig. 3 sind beispielhaft drei derartige Zug-/Stosselemente 70 vorgesehen, welche an einer entsprechenden Zahl vertikal stehender Rippen 72 befestigt sind. Jede Rippe 72 besitzt einen oberen Abschnitt 72a, der am Halsabschnitt 36 befestigt ist, sowie einen unteren Abschnitt 72b, der mit dem Deckenbereich 10c verbunden ist. Die beiden Abschnitte 72a, 72b sind durch einen Schlitz 72c getrennt, der eine elastische Verformbarkeit des Halsabschnitts 36 gewährleistet.

Aus den bereits genannten Gründen ist das obere Drehlager 35 vorzugsweise ein Pendelrollenlager, ein Achsialkugellager ein Schulterkugellager oder ein Kegelrollenlager.

Ein Kraftübertragungselement 39 ist fest mit der Antriebswelle 37 verbunden und erstreckt sich durch das obere Drehlager 35 bis zu einer Riemenscheibe 40, welche über einen Riemen 41 vom Positionierantrieb 22 angetrieben wird (vgl. Fig. 4).

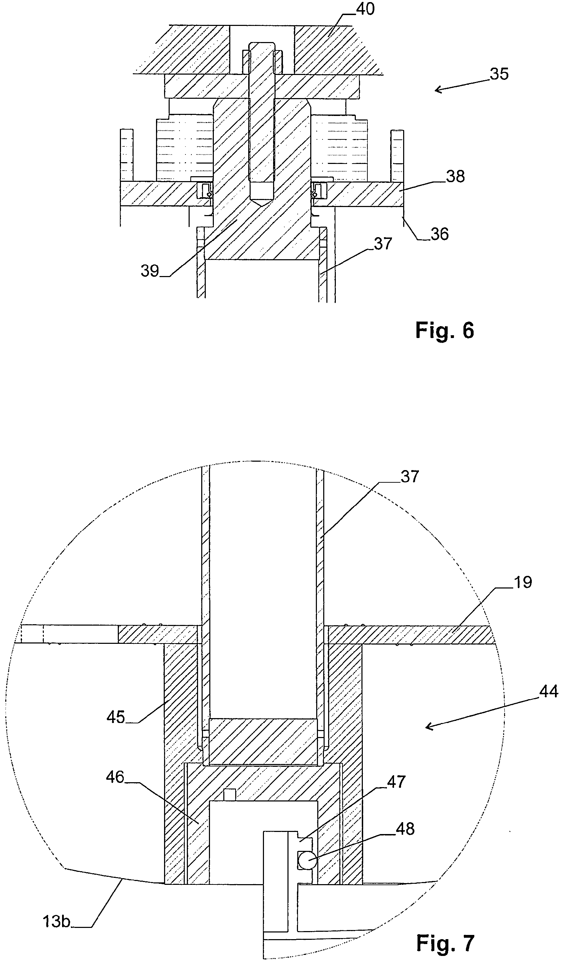

Am unteren Ende des Karussells 10 ist, wie aus Fig. 3 und 7 ersichtlich, ein unteres Drehlager 44 vorgesehen. Hierzu ist konzentrisch zur Drehachse 16 unten am Karussell 18 ein Rohrabschnitt 45 befestigt, in dessen Inneres von unten her ein Rollenlager eingreift. Das Rollenlager wird von einem am Rohrabschnitt 45 angebrachten Ring 46 gebildet, der mit dem Karussell 18 mitdreht, sowie von einem stationären, am Bodenbereich 10b des Lagerbehälters befestigen Dorn 47, zwischen denen Rollen oder Kugeln 48 laufen (vom Dorn 47 und den Kugeln 48 ist in Fig. 7 jeweils nur die linke Hälfte gezeigt). Das untere Drehlager 44 hat die Aufgabe, seitliche Auslenkungen des Karussells 18 zu beschränken, es braucht aber keine vertikal gerichteten Gewichtskräfte aufzunehmen, so dass es konstruktiv wesentlich einfacher als das obere Drehlager 35 ausgeführt sein kann. Darüber hinaus braucht die Innenwand 13b im Bodenbereich 10b keine grossen Kräfte aufzunehmen, was die Konstruktion des Behälters ebenfalls vereinfacht.

### Lagerkassetten:

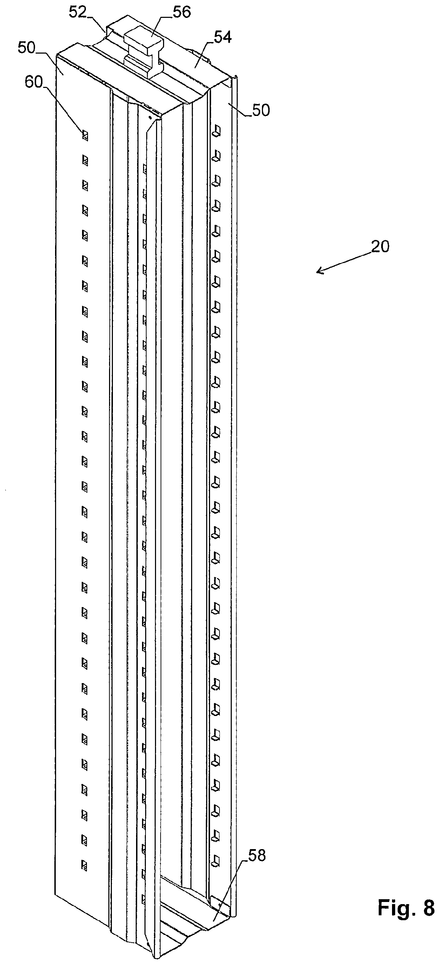

In Fig. 8 ist eine vorteilhafte Lagerkassette 20 dargestellt. Sie verfügt über zwei parallele, vertikale Seitenwände 50 und senkrecht dazu über eine vertikale Rückwand 52. Gegenüber der Rückwand 52 ist die Lagerkassette 20 offen, so dass auf die in der Lagerkassette 20 untergebrachten Probeplatten bzw. Laborobjekte zugegriffen werden kann. Am oberen Ende der Lagerkassette 20 ist ein Deckenteil 54 angeordnet, an welchem die Seitenwände 50 und die Rückwand 52 sowie Halteelement 56 befestigt sind. Das Halteelement 56 dient der Kommissioniervorrichtung 8 zum Ergreifen der Kassette. Am unteren Ende der Lagerkassette 20 ist ein Bodenteil 58 angeordnet, an welchem wiederum die Seitenwände 50 und die Rückwand 52 befestigt sind.

Die Lagerkassette 20 bildet eine Vielzahl von übereinander angeordneten Lagerstellen, von denen jede eine Probeplatte bzw. ein Laborobjekt aufnehmen kann. Die Lagerkassetten sind so aufgebaut, dass sie eine hohe mechanische Genauigkeit über einen sehr weiten Temperaturbereich gewährleisten. Ferner verfügen sie über Zentrier- und Transportvorrichtungen, die eine hohe mechanische Positioniergenauigkeit bzw. den automatischen Transport ermöglichen.

Im dargestellten Ausführungsbeispiel wird jede Lagerstelle von mehreren Winkeln 60 gebildet. Diese Winkel stehen von den Seitenwänden 50 und der Rückwand 52 nach innen ab und bilden seitliche und rückseitige Auflagen für die Probenplatten.

### Bemerkungen:

Die vorgeschlagene Lösung erlaubt es, Proben in einfacher und automatisierter Weise bei sehr tiefen Temperaturen zu lagern. Da der Zugriff automatisiert erfolgen kann, können auch sehr grosse Lagerbehälter eingesetzt werden, welche aufgrund der grossen zu bewegenden Massen sowie aus Gründen der Sicherheit für eine manuelle Beschickung nicht geeignet wären.

Während in der vorliegenden Anmeldung bevorzugte Ausführungen der Erfindung beschrieben sind, ist klar darauf hinzuweisen, dass die Erfindung nicht auf diese beschränkt ist und in auch anderer Weise innerhalb des Umfangs der folgenden Ansprüche ausgeführt werden kann.

## Patentansprüche

1. Lagerbehälter zur Tieftemperaturlagerung von Laborobjekten umfassend
- ein Gehäuse (10),
- einen Innenraum (14),
- eine um den Innenraum (14) angeordnete Isolation (12),
- einen Deckenbereich (10c), welcher den Innenraum (14) nach oben abschliesst,
- eine Öffnung (6) im Deckenbereich (10c), welche einen Zugriff auf den Innenraum (14) von aussen bereitstellt,
- ein drehbar im Innenraum (14) angeordnetes Karussell (18) mit Lagerplätzen für die Laborobjekte,
- ein oberes Drehlager (35), welches sich oberhalb des Karussells (18) befindet und an welchem das Karussell (18) drehbar aufgehängt ist,
**dadurch gekennzeichnet, dass** der Lagerbehälter eine Vielzahl von Lagerkassetten (20) aufweist, wobei jede Lagerkassette (20) eine Mehrzahl der Lagerplätze übereinander bildet, wobei jede Lagerkassette (20) durch die Öffnung (6) aus dem Lagerbehälter entnehmbar ist und wobei das Karussell (18) ein Bodenelement (19) aufweist, auf welchen die Lagerkassetten (20) ruhen, und das Karussell (18) beabstandet vom Bodenelement (19) mindestens ein Führungselement (31) aufweist, welches die auf dem Bodenelement (19) ruhenden Lagerkassetten horizontal sichert, aber eine vertikale Bewegung der Lagerkassetten zulässt.

2. Lagerbehälter nach einem der vorangehenden Ansprüche, wobei das obere Drehlager (35) ausserhalb der Isolation (12) angeordnet ist.

3. Lagerbehälter nach einem der vorangehenden Ansprüche, umfassend einen vertikal über den Deckenbereich (10c) nach oben hinaus ragenden Halsabschnitt (36), wobei die Isolation (12) sich über den Deckenbereich (10c) und den Halsabschnitt (36) bis zu einem oberen Ende des Halsabschnitts (36) erstreckt, und wobei das obere Drehlager (35) am oberen Bereich des Halsabschnitts (36) angeordnet ist.

4. Lagerbehälter nach Anspruch 3, wobei das Karussell (18) eine Antriebswelle (37) aufweist, welche sich durch den Halsabschnitt (36) zum oberen Drehlager (35) erstreckt.

5. Lagerbehälter nach einem der Ansprüche 3 oder 4, wobei das obere Drehlager (35) auf einem oberen Ende (38) des Halsabschnitts (36) aufliegt.

6. Lagerbehälter nach einem der vorangehenden Ansprüche, wobei das obere Drehlager (35) ein Pendelrollenlager, ein Achsialkugellager, ein Schulterkugellager oder ein Kegelrollenlager ist.

7. Lagerbehälter nach einem der vorangehenden Ansprüche, wobei das Führungselement (31) als Platte ausgestaltet ist, welche an Standorten der Lagerkassetten (20) Führungsöffnungen (32) aufweist, durch welche sich die Lagerkassetten (20) erstrecken.

8. Lagerbehälter nach einem der vorangehenden Ansprüche, wobei das Karussell (18) mehrere, auf unterschiedlichen Höhen angeordnete Führungselemente (31) aufweist.

9. Lagerbehälter nach einem der vorangehenden Ansprüche, wobei an einem unteren Ende des Karussells (18) ein unteres Drehlager (44) vorgesehen ist, welches seitliche Auslenkungen des Karussells (18) beschränkt.

10. Lagerbehälter nach Anspruch 9, wobei auf dem unteren Drehlager (44) in einem Normalbetrieb des Lagerbehälters keine vertikalen Kräfte lasten.

11. Lagerbehälter nach einem der vorangehenden Ansprüche mit einem Positionierantrieb (22) zum Drehen des Karussells (18).

12. Lagerbehälter nach einem der vorangehenden Ansprüche mit einer Türe (5) zum Verschliessen der Öffnung (6) und mit einem Türantrieb (26) zum Bewegen der Türe (26).

13. Lagerbehälter nach Anspruch 12, die Türe schwenkbar am Gehäuse (10) angeordnet ist und wobei der Türantrieb (26) ein linear ausfahrbares Antriebsglied (33) aufweist, welches an einem ersten Ende (34a) schwenkbar und an einem zweiten Ende (34b) schwenkbar mit der Türe verbunden ist.

14. Lagerbehälter nach einem der vorangehenden Ansprüche, wobei bei der Öffnung (6) ein Zentrierelement (30) angeordnet ist, wobei das Zentrierelement (30) mindestens einen vertikalen Durchgang (30a) zum Führen der Lagerkassetten (20) beim Einführen oder Entnehmen aufweist.

15. Lagerbehälter nach Anspruch 14, wobei das Zentrierelement (30) mehrere, unterschiedlich weit von einer Drehachse (16) des Karussells (18) beabstandete Durchgänge (30a) aufweist.

16. Lagerbehälter nach einem der vorangehenden Ansprüche, wobei das obere Drehlager (35) schwenkjustierbar ist.

17. Lagerbehälter nach den Ansprüchen 3 und 16, wobei am Halsabschnitt (36) mindestens drei einstellbare Zug-/Stosselemente (70) vorgesehen sind, mit denen der Halsabschnitt (36) in mindestens drei unterschiedliche Richtungen auslenkbar ist.

## Claims

1. Storage container for low-temperature storage of laboratory objects, comprising
- a housing (10),
- an inner space (14),
- an insulation (12) arranged around the inner space (14),
- a ceiling region (10c) which closes off the inner space (14) at the top,
- an opening (6) in the ceiling region (10c) which provides access to the inner space (14) from the outside,
- a rotating carousel (18) arranged in the inner space (14) with storage places for the laboratory objects,
- an upper pivot bearing (35) which is located above the carousel (18) and on which the carousel (18) is rotatably suspended,
**characterized in that** the storage container comprises a plurality of storage cassettes (20), each storage cassette (20) forming a plurality of storage locations one above the other, wherein each storage cassette (20) is removable from the storage container through the opening (6) and wherein the carousel (18) comprises a bottom element (19), on which the bearing cassettes (20) rest and the carousel (18) has at least one guide element (31) spaced apart from the bottom element (19), which guide element horizontally secures the storage cassettes resting on the bottom element (19), but permits vertical movement of the storage cassettes.

2. Storage container according to one of the preceding claims, wherein the upper pivot bearing (35) is arranged outside the insulation (12).

3. Storage container according to one of the preceding claims, comprising a neck portion (36) projecting vertically upwardly beyond the ceiling region (10c), wherein the insulation (12) extends across the ceiling region (10c) and the neck portion (36) to an upper end of the neck portion (36), and wherein the upper pivot bearing (35) is located in the upper region of the neck portion (36).

4. Storage container according to claim 3, wherein the carousel (18) comprises a drive shaft (37) extending through the neck portion (36) to the upper pivot bearing (35).

5. Storage container according to any of claims 3 or 4, wherein the upper pivot bearing (35) rests on an upper end (38) of the neck portion (36).

6. Storage container according to one of the preceding claims, wherein the upper pivot bearing (35) is a spherical roller bearing, an axial ball bearing, a shoulder ball bearing or a tapered roller bearing.

7. Storage container according to one of the preceding claims, wherein the guide element (31) is designed as a plate which has guide openings (32) at locations of the storage cassettes (20), through which the storage cassettes (20) extend.

8. Storage container according to one of the preceding claims, wherein the carousel (18) comprises a plurality of guide elements (31) arranged at different heights.

9. Storage container according to one of the preceding claims, wherein a lower pivot bearing (44) is provided at a lower end of the carousel (18), which limits lateral deflections of the carousel (18).

10. Storage container according to claim 9, wherein no vertical forces are applied to the lower pivot bearing (44) during normal operation of the storage container.

11. Storage container according to one of the preceding claims with a positioning drive (22) for rotating the carousel (18).

12. Storage container according to one of the preceding claims, with a door (5) for closing the opening (6) and with a door drive (26) for moving the door (26).

13. Storage container according to claim 12, wherein the door is pivotably arranged on the housing (10) and wherein the door drive (26) has a linearly extendable drive member (33) which is pivotably connected to the door at a first end (34a) and pivotably connected to the door at a second end (34b).

14. Storage container according to one of the preceding claims, wherein a centering element (30) is arranged at the opening (6), wherein the centering element (30) has at least one vertical passage (30a) for guiding the storage cassettes (20) during insertion or removal.

15. Storage container according to claim 14, wherein the centering element (30) has a plurality of passages (30a) spaced at different distances from an axis of rotation (16) of the carousel (18).

16. Storage container according to one of the preceding claims, wherein the upper pivot bearing (35) is pivotally adjustable.

17. Storage container according to claims 3 and 16, wherein at least three adjustable pull/push elements (70) are provided on the neck section (36), by means of which the neck section (36) can be deflected in at least three different directions.

## Revendications

1. Récipient de stockage pour le stockage à basse température d'objets de laboratoire, comprenant
- un boîtier (10),
- un espace intérieur (14),
- une isolation (12) disposée autour de l'espace intérieur (14),
- une zone de plafond (10c) qui ferme l'espace intérieur (14) en haut,
- une ouverture (6) dans la zone de plafond (10c) qui donne accès à l'espace intérieur (14) par l'extérieur,
- un carrousel rotatif (18) disposé dans l'espace intérieur (14) avec des emplacements de stockage pour les objets de laboratoire,
- un palier de pivotement supérieur (35) qui est situé au-dessus du carrousel (18) et sur lequel le carrousel (18) est suspendu en rotation,
**caractérisé en ce que** le récipient de stockage comprend une pluralité de cassettes de stockage (20), chaque cassette de stockage (20) formant une pluralité d'emplacements de stockage les uns au-dessus des autres, chaque cassette de stockage (20) étant détachable du récipient de stockage à travers l'ouverture (6) et le carrousel (18) comprenant un élément inférieur (19), sur lequel reposent les cassettes de stockage (20) et le carrousel (18) présentant au moins un élément de guidage (31) espacé de l'élément inférieur (19), l'élément de guidage fixant horizontalement les cassettes de stockage posées sur l'élément inférieur (19), mais permettant un mouvement vertical des cassettes de stockage.

2. Récipient de stockage selon l'une des revendications précédentes, dans lequel le palier pivot supérieur (35) est disposé à l'extérieur de l'isolation (12) .

3. Récipient de stockage selon l'une des revendications précédentes, comprenant une partie de col (36) faisant saillie verticalement vers le haut au-delà de la région de plafond (10c), dans lequel l'isolation (12) s'étend à travers la région de plafond (10c) et la partie de col (36) vers une extrémité supérieure de la partie de col (36), et dans lequel le palier de pivotement supérieur (35) est situé dans la région supérieure de la partie de col (36).

4. Récipient de stockage selon la revendication 3, dans lequel le carrousel (18) comprend un arbre d'entraînement (37) qui s'étend à travers la partie col (36) jusqu'au palier de pivotement supérieur (35).

5. Récipient de stockage selon l'une quelconque des revendications 3 ou 4, dans lequel le palier de pivotement supérieur (35) repose sur une extrémité supérieure (38) de la partie col (36).

6. Récipient de stockage selon l'une des revendications précédentes, dans lequel le palier de pivotement supérieur (35) est un roulement à rotule sur rouleaux, un roulement à billes axial, un roulement à épaulement ou un roulement à rouleaux conique.

7. Récipient de stockage selon l'une des revendications précédentes, dans lequel l'élément de guidage (31) est réalisé sous la forme d'une plaque qui présente des ouvertures de guidage (32) aux emplacements des cassettes de stockage (20), à travers lesquelles les cassettes de stockage (20) s'étendent.

8. Récipient de stockage selon l'une des revendications précédentes, dans lequel le carrousel (18) comprend plusieurs éléments de guidage (31) disposés à différentes hauteurs.

9. Récipient de stockage selon l'une des revendications précédentes, dans lequel un palier de pivotement inférieur (44) est prévu à une extrémité inférieure du carrousel (18), qui limite des déviations latérales du carrousel (18).

10. Récipient de stockage selon la revendication 9, dans lequel aucune force verticale n'est appliquée au palier pivot inférieur (44) pendant le fonctionnement normal du récipient de stockage.

11. Récipient de stockage selon l'une des revendications précédentes, avec un entraînement de positionnement (22) pour faire tourner le carrousel (18).

12. Récipient de stockage selon l'une des revendications précédentes, avec une porte (5) pour fermer l'ouverture (6) et avec un entraînement de porte (26) pour déplacer la porte (26).

13. Récipient de stockage selon la revendication 12, dans lequel la porte est disposée de manière pivotante sur le boîtier (10) et dans lequel l'entraînement de porte (26) comporte un élément d'entraînement (33) pouvant être déployé linéairement, qui est relié de manière pivotante à la porte à une première extrémité (34a) et relié de manière pivotante à la porte à une deuxième extrémité (34b).

14. Récipient de stockage selon l'une des revendications précédentes, dans lequel un élément de centrage (30) est disposé à l'ouverture (6), l'élément de centrage (30) présentant au moins un passage vertical (30a) pour guider les cassettes de stockage (20) pendant l'insertion ou le retrait.

15. Récipient de stockage selon la revendication 14, dans lequel l'élément de centrage (30) présente une pluralité de passages (30a) espacés à différentes distances d'un axe de rotation (16) du carrousel (18).

16. Récipient de stockage selon l'une des revendications précédentes, dans lequel le palier de pivotement supérieur (35) est réglable en pivotement.

17. Récipient de stockage selon les revendications 3 et 16, dans lequel au moins trois éléments de traction/poussée réglables (70) sont prévus sur la partie col (36), au moyen desquels la partie col (36) peut être déviée dans au moins trois directions différentes.
